(19) Europäisches Patentamt
European Patent Office
Office européen des brevets

(11) Publication number: **0 130 389 A2**

# (12) EUROPEAN PATENT APPLICATION

(21) Application number: **84106262.3**

(22) Date of filing: **01.06.84**

(51) Int. Cl.[4]: **C 08 G 18/62**, C 08 G 18/10, C 08 G 18/08, C 08 L 75/04, C 09 J 3/16, C 09 D 3/72, C 08 F 283/00, C 09 J 5/06, C 09 K 3/10 // (C08L75/04, 63/00, 29/00, 63/10)

(30) Priority: **05.07.83 US 511709**

(43) Date of publication of application: **09.01.85 Bulletin 85/2**

(84) Designated Contracting States: **DE FR GB IT**

(71) Applicant: **W.R. GRACE & CO., Grace Plaza 1114 Avenue of the Americas, New York New York 10036 (US)**

(72) Inventor: **Shiow, Ching Lin, 3525 Angus Valley Trail, Ellicott City Maryland 21043 (US)**

(74) Representative: **UEXKÜLL & STOLBERG Patentanwälte, Beselerstrasse 4, D-2000 Hamburg 52 (DE)**

(54) **One component thermoset composition.**

(57) This invention relates to a one component thermosettable reactive plastisol composition comprising
(1) at least one thermoplast in powder form containing at least two active hydrogen groups, e.g., polyvinyl acetals, polyvinyl alcohol, acrylic or methacrylic acid copolymers, acrylamides, hydroxyethyl acrylate or methacrylate copolymer;
(2) a liquid plasticizer having isocyanate or blocked isocyanate terminal groups, either per se or in combination with a plasticizer group member selected from the group consisting of
   (a) an acrylate terminated monomer, oligomer or propolymer,
   (b) an epoxide resin containing more than one epoxide group per molecule, and
   (c) a mixture of (a) and (b).

The composition can optionally also contain a conventional accelerator for the reaction between isocyanate and active hydrogen groups as well as latent curing agents for the epoxide resin and free radical thermal initiators for the acrylate terminated monomer, oligomer or prepolymer.

The composition is useful as an adhesive, sealant or coating and when heated at or above its fluxing temperature acquires good handling strength due to plasticization and good structural strength after heat curing. Further curing on aging is obtained through the reaction of moisture with any isocyanate residue.

EP 0 130 389 A2

## BACKGROUND OF THE INVENTION

### 1. Field of the Invention

This invention relates to a thermosettable adhesive or sealant plastisol dispersion composition which, on heating at or above the fluxing temperature, rapidly provides handling strength and can be crosslinked to give a thermoset seal or bond by heat.

The invention also relates to a process for forming a crosslinked, bond or seal.

### 2. Description of the Prior Art

Conventional plastisol compositions are made up of finely divided thermoplastic resin particles in a liquid, non-volatile plasticizer in which the resin is insoluble at room temperature. On elevating the temperature of the composition, the resin particles are substantially completely plasticized by the plasticizer producing a homogeneous solid solution which is a rubbery, thermoplastic gel.

The most widely used resin in plastisol compositions has been polyvinyl chloride because of certain inherent characteristics. Vinyl chloride resins produced either by bulk, suspension or aqueous emulsion polymerization or mixtures thereof have been found to be particularly advantageous in such compositions. Vinyl chloride resins produced by aqueous emulsion polymerization, because of their excellent stir-in properties which permit easy dispersion in a liquid plasticizer up to a high concentration of the resin at room temperature to form paste like mixtures, have been found useful in many applications.

However, vinyl chloride resins whether produced by bulk, suspension or by emulsion polymerization, have certain drawbacks. Vinly chloride resin decomposes upon heating in processing and releases corrosive hydrogen

chloride which ultimately results in the discoloration and deterioration of fabricated polymer properties. A problem recently noted in regard to polyvinyl chloride is the possible carcinomatous effect these polymers may have on the human body due to possibly residual vinyl chloride monomer being present in the polymer. In light of the above, there has been a recent search for materials which can be substituted for polyvinyl chloride in various end uses.

The conventional plastisols after plasticization normally have low heat resistance resulting from the plasticization which reduces the heat deflection temperature of the polymers. To improve the heat resistance, reactive plasticizers such as diacrylates (Dainippon Ink and Chemical JP 80 52,335) and epoxy resins (Dunlop, JP 81 00841) were mixed with conventional plasticizers to provide crosslinks after curing the fluxed plastisol.

In general, the thermosettable plastisol is based on two reactive ingredients separated physically as two packages. This separation leads to the problems of non-uniform mixing and inaccurate metering in application. Furthermore, the materials, after mixing, have to be used in a very short period to prevent gellation caused by the crosslinking reaction. This creates difficulties such as short pot life, quality control and the economic concerns of a two-package thermoset system.

To prepare a one package thermoset, technology such as chemical blocking of the reactive group was developed. Unfortunately, the available one package systems suffer from short shelf life and reduced curing speed. A solution to this problem is to prepare reactive plastisols which rapidly turn to a flexible or rubbery solid upon

heating at a temperature above the fluxing point to provide handling mechanical strength and cure to a wholly crosslinked thermoset at the same or more elevated temperature after fluxing. In these materials the plasticizer for the thermoplast contains functional groups which in the presence of latent thermal curing agents allow the plasticizer to cure on heating. One example of such a system is set out in U. S. 4,020,966. Therein a liquid epoxide plasticizer and a resin component comprising a copolymer of a normal alpha-olefin and maleic anhydride are admixed at room temperature and heated to an elevated temperature, e. g., 200°C, resulting in a fluxed, thermoset product.

3. Summary of the Invention

This invention concerns the preparation of a one-component thermoset based on the reaction of isocyanate terminated compounds and blocked polyisocyanates with polymers containing at least two hydrogen active moieties such as polyvinyl acetals, polyvinyl alcohol and copolymers of polyvinyl alcohol. This invention also deals with using the combination of plastisol technology and thermoset chemistry to achieve the preparation of one-component thermoset resins.

A thermosettable resin converts to an infusible crosslinked plastic through irreversible curing reactions. Because of this permanent property change, excellent heat resistance and good mechanical properties are obtained. Furthermore, thermosetting resins are normally in the form of low molecular weight oligomers having a low viscosity for processing convenience. Based on these facts, the thermoset resin has been used in applications such as adhesives, sealants, coatings, composites, reaction injection moldings, laminates and others.

In general, known thermosettable polyurethanes are based on two reactive ingredients, a polyisocyanate and a resin containing hydrogen active moieties such as a polyol or polyamine. Therefore, to obtain a good shelf life, the two components have to be physically separated to prevent the crosslinking reaction. This separation results in the problems of non-uniform mixing and inaccurate metering in application. Consequently, this separation leads to inconsistency of material properties. Additionally, the materials, after mixing, have to be used in a very short period to prevent gellation caused by the crosslinking reaction. Undoubtedly, this could also lead to the difficulty of pot life control and the economic concerns of two-package thermoset systems.

Using thermodynamic control, the blocked isocyanate has been used in one-package thermosetting urethane applications. The formation and thermal cleavage of blocked isocyanates can be represented as follows:

$$R\text{-}(NCO)_n + nBH \longrightarrow R\text{-}(NH\overset{\overset{O}{\|}}{C}\text{-}B)_n$$

Cleavage temperatures range from 60° to 200°C, depending on the structure of the blocking agents. Upon heating above the cleavage temperature, the blocked isocyanate dissociates and forms the original isocyanate which reacts with the formulated compounds containing hydrogen active groups to provide crosslinks. However, because of the slow reversible reaction, the curing speed usually is a concern in practical applications.

The plastisol technology is being used in industry to process thermally degradable polyvinyl chloride (PVC) having a decomposition temperature lower than its melting point. A classical plastisol is composed of fine PVC powder dispersed in a plasticizer. Because the

plasticization occurs only at a certain temperature, the liquid or pasty plastisol solidifies at initial fusion temperature, develops its physical integrity at minimum fluxing temperature and becomes a clear homogeneous solid at its clear point. The plasticization depends on diffusion and compatibility between the plasticizer and polymer. In the process, the polymer powder turns from individually separated particles to a homogeneous solid without melt. The finished product varies from rubbery plastic to rigid material, according to the structure of the plasticizer and the composition of the plastisol.

To combine the plasticization principle and thermoset technology, the plastisol prepared from a polymer containing active hydrogen groups and a plasticizer having isocyanate terminated groups or blocked isocyanate structures should have storage stability, a rapid growth of handling strength attributed to plasticization and a structural strength after curing.

## OBJECTS OF THE INVENTION

One object of the instant invention is to produce a novel process and composition. Another object of the instant invention is to produce a one component, thermosettable plastisol composition which is useful as an adhesive or sealant. Yet another object of the instant invention is to produce a plastisol composition which on curing substantially minimizes or precludes exuding or extraction of the plasticizer. Still another object of the invention is to produce a plastisol composition which on heating to the fluxing temperature acquires handling strength and cures to a thermoset at or above said fluxing temperature. Other objects will become apparent from a reading hereinafter.

## DESCRIPTION OF THE INVENTION

This invention relates to a one component thermosettable reactive plastisol composition comprising

(1) at least one thermoplast in powder form containing at least two active hydrogen groups, e. g., polyvinyl acetals, polyvinyl alcohol, acrylic or methacrylic acid copolymers, acrylamides, hydroxyethyl acrylate or methacrylate copolymer;

(2) a liquid plasticizer having isocyanate or blocked isocyanate terminal groups, either per se or in combination with a plasticizer group member selected from the group consisting of

  (a) an acrylate terminated monomer, oligomer or prepolymer,

  (b) an epoxide resin containing more than one epoxide group per molecule, and

  (c) a mixture of (a) and (b).

The composition can optionally also contain a conventional accelerator for the reaction of isocyanate with active hydrogen groups as well as latent curing agents for the epoxide resin and free radical thermal initiators for the acrylate terminated monomer, oligomer or prepolymer.

The composition is useful as an adhesive, sealant or coating and when heated at or above its fluxing temperature acquires good handling strength due to plasticization and good structural strength after heat curing. Further curing on aging is obtained through the reaction of moisture with any isocyanate residue.

The plastisol of the invention operates in the same method as conventional plastisols. That is, herein the term "plastisol" refers to dispersions of finely divided thermoplastic resin particles in a liquid non-volatile

plasticizer in which the resin is insoluble and cannot be swollen by the plasticizer at room temperature. However, at elevated temperatures, the resin fluxes, i. e., is substantially completely plasticized by the plasticizer so that a homogeneous, solid solution is obtained which forms a rubbery thermoplastic mass. At this point the plastisol has handling or mechanical strength. Further heating at or above the fluxing temperature results in a thermoset material with ultimate structural strength. If only the plasticizer is reactive, it will crosslink to a thermoset and form a semi-interpenatrating network. If the reactive plasticizer reacts with the thermoplast, a crosslinked interpenetrating network results. In addition to the resin thermoplast and the plasticizer, the formulation may also contain latent curing agents, electrically conductive particles, fillers, pigments, stabilizers and various conventional compound ingredients.

The plastisol compositions herein are formed by admixture of 100 parts by weight of the resin particles with about 50 to 2,000 parts by weight of a plasticizer per 100 parts of resin and, when necessary, 0.5 to 20 parts by weight of a latent thermal initiator for the plasticizer group member or 0.1 to 5 parts by weight of an accelerator for the isocyanate reaction. Thereafter, the pasty plastisol admixture is heated at a temperature at or above the fluxing temperature which is lower than the melting point of the thermoplast resin for a time sufficient to plasticize the resin by the plasticizer and obtain a homogeneous, solid solution which is a rubbery mass. Additionally, it is also possible to heat the plastisol composition above the melting point of the resin and obtain a fluxed product. The pasty plastisol can be placed between two adherends and heated at or above the decomposition temperature of the initiator and fluxing

temperature of the plastisol to flux and initiate the polymerization at the same time.

The polyvinyl acetals used as a thermoplast in the instant invention are prepared from aldehydes and polyvinyl alcohols. Polyvinyl alcohols are high molecular weights synthetic resins, preferably above 1,000 g/mole, containing various percentages of hydroxyl and acetate groups produced by hydrolysis of polyvinyl acetate. Polyvinyl alcohols are usually classified as partially hydrolyzed (15-30% polyvinyl acetate groups) and completely hydrolyzed (0-5% acetate groups). Both types, in various molecular weight grades, are used in producing commercially available polyvinyl acetals.

The conditions of the acetal reaction and the concentration of the particular aldehyde and polyvinyl alcohol used are closely controlled to form polymers containing predetermined proportions of hydroxyl groups, acetate groups and acetal groups. The final product may be represented by the following stylized structure:

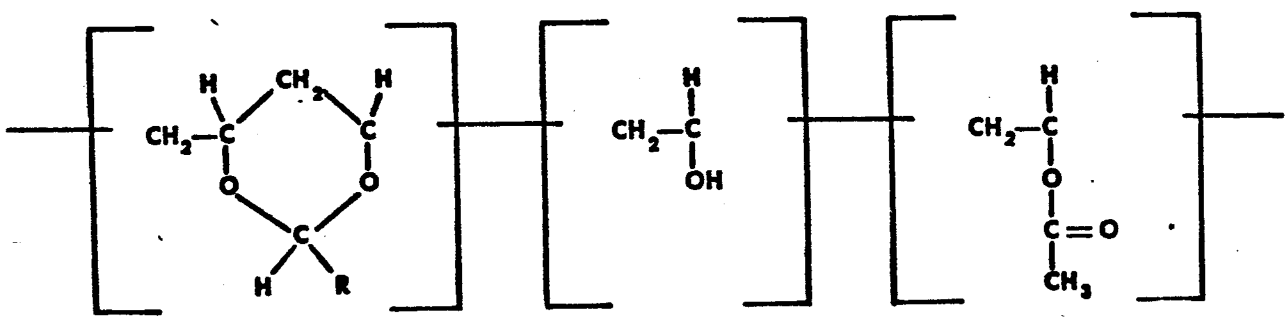

wherein R is H, $C_nH_{2n+1}$ wherein n is 1-10, unsaturated olefin or aryl groups.

The poly(vinyl acetals) may be made either from poly(vinyl alcohol) or directly from poly(vinyl acetate) without separating the alcohol. The two most widely used

polyvinyl acetals are polyvinyl formal and polyvinyl butyral.

In the preparation of polyvinyl formal the direct process is normally used. That is, in a typical process, 100 parts of polyvinyl acetate are added to a mixture of 200 parts acetic acid and 70 parts water, which has been warmed to about 70°C and stirred to complete solution. 60 parts 40% formalin and 4 parts of sulfuric acid (catalyst) are added and the reaction is carried out for 24 hours at 70°C. Water is added to the mixture with rapid agitation to precipitate the granules which are then washed free from acid and dried. Commercially available polyvinyl formal can have weight average molecular weights ranging from about 10,000 to about 40,000, a hydroxyl content expressed as percent polyvinyl alcohol ranging from 5.0 to 7.0, an acetate content expressed as percent polyvinyl acetate ranging from 9.5 to 30% and a formal content expressed as percent polyvinyl formal ranging from 68 to 82%.

In a typical process for forming polyvinyl butyral, 140 parts of fully hydrolyzed polyvinyl alcohol are suspended in 800 parts of ethanol. 80 parts of butyraldehyde and 8 parts of sulfuric acid are added and the reaction is carried out at about 80°C for 5 to 6 hours. The solution of polyvinyl butyral is diluted with methanol and the polymer precipitated by the addition of water during vigorous agitation. The polymer is then stabilized, washed and dried. Commercially available polyvinyl butyrals have weight average molecular weights ranging from 30,000 to 270,000, a hydroxyl content ranging from 9 to 21%, an acetate content ranging from 0 to 2.5% and a butyral content ranging from 80 to 88%. Although these two polyvinyl acetates are the most widely used because of their commercial availability, other polyvinyl

acetals such as polyvinyl propional, polyvinyl acetal and polyvinyl benzal are also operable herein. The polyvinyl acetal particles used herein have a particle size in the range from about 0.1 to about 1,500 microns.

Acrylic or methacrylic acid copolymers are synthesized from the copolymerization of acrylic or methacrylic acid and vinyl monomers such as methacrylate, styrene and vinyl acetate. The properties of a copolymer depend on the composition of the polymer. The carboxylic group reacts with isocyanate after the plastisol is fluxed at a temperature above the fluxing point and forms an amide.

Polyvinyl alcohols used to form the thermoplast in powder form herein are the same as those set out supra to form the polyvinyl acetals.

The following generalized reactions set forth the reaction of various thermoplasts with the isocyanate after the plastisol is fluxed at a temperature above its fluxing point:

acrylic acid copolymers

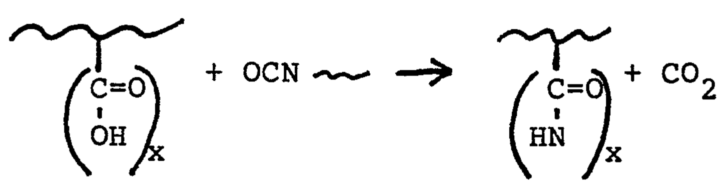

acrylamide

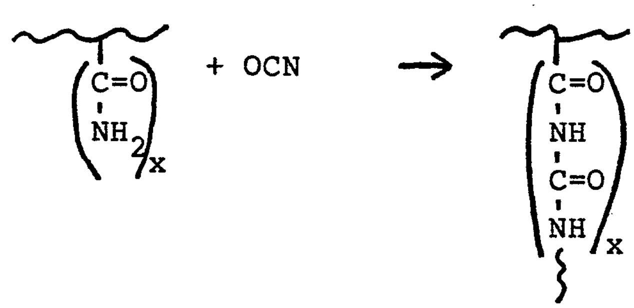

2-hydroxyethyl acrylate

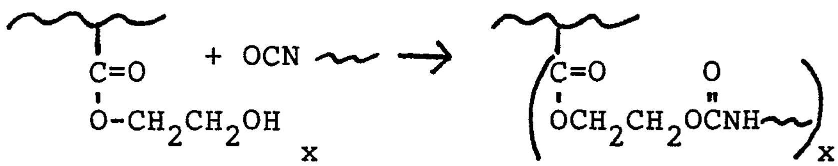

polyvinyl alcohol

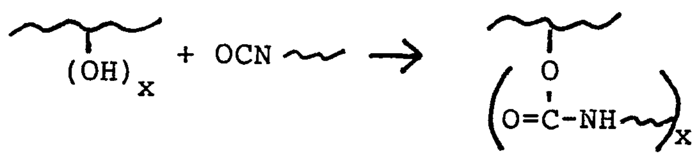

The isocyanate terminated reactive plasticizer can be synthesized from reacting a polyol with a diisocyanate in the presence of or without a catalyst. In general, the preparation can be represented by the equation:

$$R-(OH)_n + nOCN-R'-NCO \longrightarrow R-(O\overset{O}{\overset{\|}{C}}NHR'-NCO)_n$$

where n = 2 to 4.

The isocyanate terminated resin can further react with a blocking agent, BH, to generate an inert plasticizer which becomes reactive toward hydrogen containing groups upon heating, to wit:

$$R-(O\overset{O}{\overset{\|}{C}}NHR'-NCO)_n + nHB \longrightarrow R-(O\overset{O}{\overset{|}{C}}NHR'-NH\overset{O}{\overset{\|}{C}}-B)_n$$

The blocking methods described in the literature, "New Developments in the Field of Blocked Isocyanate" by Z. W. Wicks, Jr., in "Progress in Organic Coatings", 9, 3 (1981), are all applicable in this application and are incorporated herein by reference.

In the instance when the reactive plasticizer is an acrylate, i. e., an acrylate terminated polyene, of the

formula:

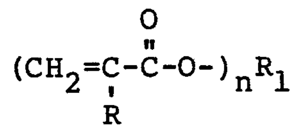

wherein R is H or $CH_3$, $R_1$ is an organic moiety and n is 1 or more,

the compound can be made by various reactants and methods. One of these acrylate terminated materials is a polyether polyol urethane polyacrylate formed by reacting a polyether polyol with a diisocyanate and end-capping the remaining isocyanate group with a hydroxyalkyl acrylate. Another material may be a polyester polyol urethane polyacrylate formed by reacting a polyester polyol with a diisocyanate and end-capping the remaining isocyanate group with a hydroxyalkyl acrylate. Still another material in this category is an epoxy acrylate formed by reacting a diepoxide with acrylic acid. Acrylate or methacrylate ester of an epoxy resin used herein are commercially available materials. One of such materials is Shell Co.'s Epocryl Resin-370 having the idealized structure:

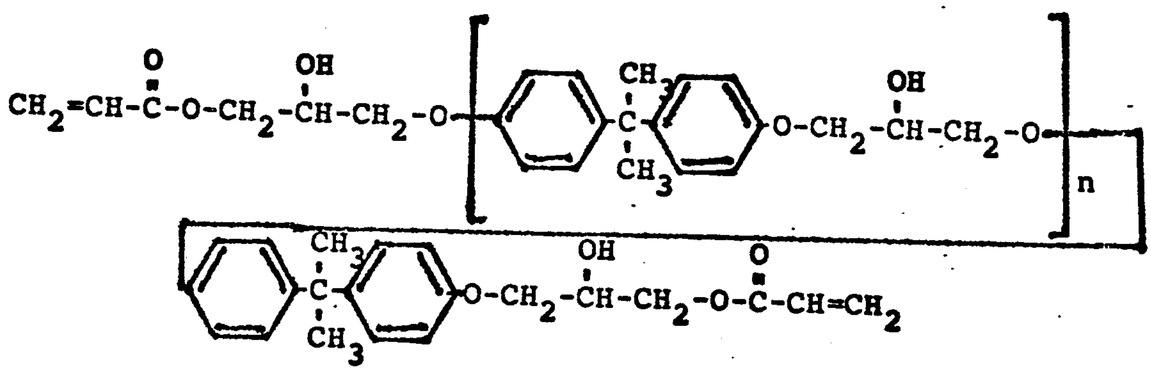

n = 0.2

This material has a viscosity of 9,000 poises at 25°C and contains 0.02 equivalents epoxide/100 g. The material is formed from the reaction of one mole of diglycidyl ether of bisphenol A reacted with two moles of acrylic acid.

Aside from substituted and unsubstituted acrylic acid being used to form the compound herein, hydroxyalkyl acrylate half esters of oxalic, malonic, succinic, glutaric, adipic, pimelic, suberic, azelaic, sebacic, phthalic, terephthalic, isophthalic acid and mixtures thereof are also operable. Thus, a generalized reaction for forming substituted or unsubstituted acrylate esters of an epoxy resin is as follows:

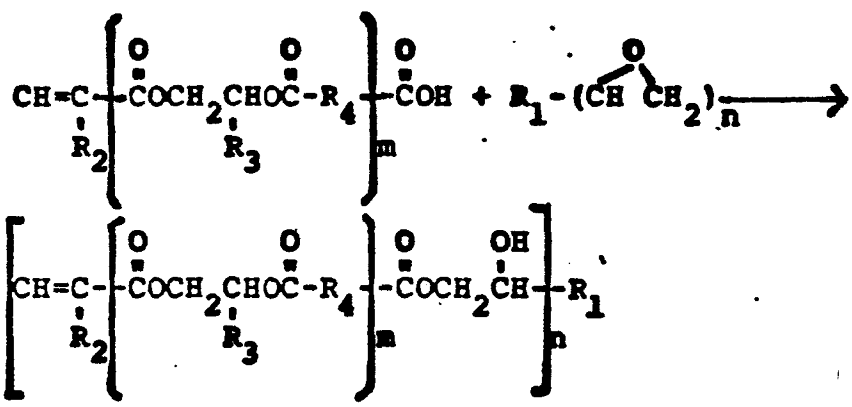

I

wherein m is 0 or 1; n is 1 to 4; $R_2$ and $R_3$ are H or $CH_3$; $R_4$ is -CH=CH-, $-C(=CH_2)-CH_2-$, 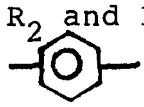 or $-(CH_2)_p$;

p is 0 to 6 and $R_1$ is an organic moiety with the valence of n. Examples of acrylate terminated polyenes operable herein include, but are not limited to, 1,3-butylene glycol diacrylate, diethylene glycol diacrylate, 1,6-hexanediol diacrylate, neopentyl glycol diacrylate, polyethylene glycol 200 diacrylate, tetraethylene glycol diacrylate, triethylene glycol diacrylate, pentaerythritol tetraacrylate, tripropylene glycol diacrylate, ethoxylated bisphenol-A diacrylate, trimethylolpropane triacrylate, di-trimethylol propane tetraacrylate, triacrylate of tris(hydroxyethyl)-isocyanate, dipentaerythritol hydroxypentaacrylate, pentaerythritol triacrylate,

ethoxylated trimethylolpropane triacrylate, triethylene glycol dimethacrylate, ethylene glycol dimethacrylate, tetraethylene glycol dimethacrylate, polyethylene glycol-200 dimethacrylate, 1,6-hexanediol dimethacrylate, neopentyl glycol dimethacrylate, polyethylene glycol-600 dimethyacrylate, 1,3-butylene glycol dimethacrylate, ethoxylated bisphenol-A dimethacrylate, trimethylolpropane trimethacrylate, diethylene glycol dimethacrylate, 1,4-butanediol diacrylate, diethylene glycol dimethacrylate, pentaerythritol tetramethacrylate, glycerin dimethacrylate, trimethylolpropane dimethacrylate, pentaerythritol trimethacrylate, pentaerythritol dimethacrylate and pentaerythritol diacrylate. Monoacrylates such as n-hexyl methacrylate, cyclohexyl methacrylate and tetrahydrofurfuryl methacrylate are also operable as reactive plasticizers herein. Mixtures of the acrylate terminated polyenes with each other or with the unsaturated polyester plasticizers of the instant invention are also operable in weight ratios of 1 to 99 to 99 to 1.

The epoxy resin to be used in the composition of the invention comprises those materials possessing more than one epoxy, i.e.,

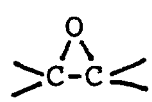

group. These compounds may be saturated or unsaturated, aliphatic, cycloaliphatic, aromatic or heterocyclic and may be substituted with substituents, such as chlorine, hydroxyl groups, ether radicals and the like.

The term "epoxy resin" when used herein and in the appended claims contemplates any of the conventional monomeric, dimeric, oligomeric or polymeric epoxy

materials containing a plurality, more than one, e. g., 1.1,, epoxy functional groups. Preferably, they will be members of classes described chemically as (a) an epoxidic ester having two epoxycycloalkyl groups; (b) an epoxy resin prepolymer consisting predominately of the monomeric diglycidyl ether of bisphenol-A; (c) a polyepoxidized phenol novolak or cresol novolak; (d) a polyglycidyl ether of a polyhydric alcohol; (e) diepoxide of a cycloalkyl or alkylcycloalkyl hydrocarbon or ether; or (f) a mixture of any of the foregoing. To save unnecessarily detailed description, reference is made to the Encyclopedia of Polymer Science and Technology, Vol. 6, 1967, Interscience Publishers, New York, pages 209-271, incorporated herein by reference.

Suitable commercially available epoxidic esters are preferably, 3,4-epoxycyclohexylmethyl 3,4-epoxycyclohexanecarboxylate (Union Carbide ERL 4221, Ciba Geigy CY-179); as well as bis(3,4-epoxy-6-methylcyclohexylmethyl)adipate (Union Carbide ERL 4289); and bis(3,4-epoxycyclohexylmethyl)adipate (Union Carbide ERL 4299).

Suitable commercially available diglycidyl ethers of bisphenol-A are Ciba Geigy Araldite 6010, Dow Chemical DER 331, and Shell Chemical Epon 828 and 826.

A polyepoxidized phenol formaldehyde novolak prepolymer is available from Dow Chemical DEN 431 and 438, and a polyepoxidized cresol formaldehyde novolak prepolymer is available from Ciba-Geigy Araldite 538.

A polyglycidyl ether of a polyhydric alcohol is available from Ciba Geigy, based on butane-1,4-diol, Araldite RD-2; and from Shell Chemical Corp., based on glycerine, Epon 812.

A suitable diepoxide of an alkylcycloalkyl hydrocarbon is vinyl cyclohexene dioxide, Union Carbide ERL 4206.

Other examples include the epoxidized esters of the polyethylenically unsaturated monocarboxylic acids, such as epoxidized linseed, soybean, perilla, oiticica, tung, walnut and dehydrated castor oil, methyl linoleate, butyl linoleate, ethyl 9,12-octadecadienoate, butyl 9,12,15-octadecatrienoate, butyl eleostearate, monoglycerides of tung oil fatty acids, monoglycerides of soybean oil, sunflower, rapeseed, hempseed, sardine, cottonseed oil and the like.

Mixtures of the acrylate terminated polyenes with each other or with the epoxide resin plasticizer of the instant invention are operable in weight ratios of 1 to 99 to 99 to 1.

The acrylate terminated polyenes are mixed with the isocyanate-containing portion of the plasticizer in amounts ranging from 1 to 70, preferably 5 to 50%, by weight of the plasticizer.

The epoxy resin is admixed with the isocyanate-containing portion of the plasticizer in amounts ranging from 1 to 70, preferably 5 to 50%, by weight of the plasticizer.

The accelerators used for promoting the reaction between an isocyanate terminated plasticizer or a blocked isocyanate plasticizer and a plasticized polymer containing active hydrogen include tertiary amines such as triethylamine, DABCO or derivatives of DABCO and organic metallic compounds such as dibutyl tin dilaurate and stannous octoate.

The thermal initiators used herein for curing the acrylate terminated polyene portion of the reactive plasticizer are free radical initiators selected from substituted or unsubstituted pinacols, azo compounds, thiurams, organic peroxides and mixtures thereof.

The organic peroxides operable are of the general formula:

$$R-O-O-(R_1-O-O)_n-R$$

wherein n = O or 1, R is independently selected from hydrogen, aryl, alkyl, aryl carbonyl, alkaryl carbonyl, aralkyl carbonyl and alkyl carbonyl and $R_1$ is alkyl or aryl, said alkyl groups containing 1 to 20 carbon atoms.

Examples of operable organic peroxides include, but are not limited to 2,5-dimethyl-2,5-di(t-butylperoxy)-hexane, 1,3-bis(t-butylperoxyisopropyl)benzene, 1,3-bis-(cumylperoxyisopropyl)benzene, 2,4-dichlorobenzoyl peroxide, caprylyl peroxide, lauroyl peroxide, t-butyl peroxyisobutyrate, benzoyl peroxide, p-chlorobenzoyl peroxide, hydroxyheptyl peroxide, di-t-butyl diperphthalate, t-butyl peracetate, t-butyl perbenzoate, dicumyl peroxide, 1,1-di(t-butylperoxy)-3,3,5-trimethylcyclohexane and di-t-butyl peroxide.

The organic peroxide is added to the composition in an amount ranging from 0.01 - 10%, preferably 0.1 - 5%, by weight based on the weight of the acrylate terminated polyene portion of the reactive plasticizer.

Examples of azo compounds operable herein include, but are not limited to, commercially available compounds such as 2-t-butylazo-2-cyanopropane; 2,2'-azobis-(2,4-dimethyl-4-methoxy-valeronitrile); 2,2'-azobis-(isobutyronitrile); 2,2'-azobis(2,4-dimethylvaleronitrile) and 1,1'-azobis-(cyclohexanecarbonitrile).

The azo compound is added to the composition in an amount ranging from 0.001 - 5%, preferably 0.01 - 2% by weight based on the weight of the acrylate terminated polyene portion of the reactive plasticizer.

The thiurams operable as thermal initiators herein are of the formula:

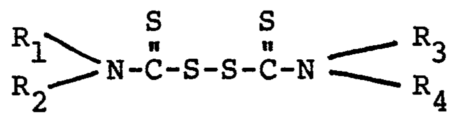

wherein $R_1$, $R_2$, $R_3$ and $R_4$ taken singly can be hydrogen, linear or branched alkyl having from 1 to about 12 carbon atoms, linear or branched alkenyl having from 2 to about 12 carbon atoms, cycloalkyl having from 3 to about 10 ring carbon atoms, cycloalkenyl having from 3 to about 10 ring carbon atoms, aryl having from 6 to about 12 ring carbon atoms, alkaryl having from 6 to about 12 ring carbon atoms, aralkyl having from 6 to about 12 ring carbon atoms and, when taken together, $R_1$ and $R_2$ and $R_3$ and $R_4$ can each be a divalent alkylene group $-(C_nH_{2n})-$ having from 2 to about 12 carbon atoms, a divalent alkenylene group $-(C_nH_{2n-2})-$ group having from 3 to about 10 carbon atoms, a divalent alkadienylene group $-(C_nH_{2n-4})-$ having from 5 to about 10 carbon atoms, a divalent alkatrienylene group $-(C_nH_{2n-6})-$ having from 5 to about 10 carbon atoms, a divalent alkyleneoxyalkylene group $-(C_xH_{2x}OC_xH_{2x})-$ having a total of from 4 to about 12 carbon atoms or a divalent alkyleneaminoalkylene group:

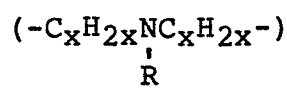

having a total of from 4 to about 12 carbon atoms.

Operable thiurams include, but are not limited to, tetramethylthiuram disulfide, tetraethylthiuram disulfide, di-N-pentamethylenethiuram disulfide, tetrabutylthiuram disulfide, diphenyldimethylthiuram disulfide, diphenyldiethylthiuram disulfide and diethyleneoxythiuram disulfide and the like.

The thiuram is added to the composition in an amount ranging from 0.005-5.0% by weight of the acrylate terminated polyene portion of the reactive plasticizer.

The substituted or unsubstituted pinacols operable herein as a thermal initiator have the general formula:

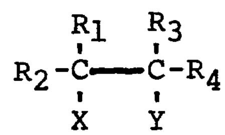

wherein $R_1$ and $R_3$ are the same or different substituted or unsubstituted aromatic radicals, $R_2$ and $R_4$ are substituted or unsubstituted aliphatic or aromatic radicals and X and Y which may be the same or different are hydroxyl, alkoxy or aryloxy.

Preferred pinacols are those wherein $R_1$, $R_2$, $R_3$ and $R_4$ are aromatic radicals, especially phenyl radical and X and Y are hydroxyl.

Examples of this class of compounds include, but are not limited to, benzopinacol, 4,4'-dichlorobenzopinacol, 4,4'-dibromobenzopinacol, 4,4'-diiodobenzopinacol, 4,4',4",4"'-tetrachlorobenzopinacol, 2,4-2',4'-tetrachlorobenzopinacol, 4,4'-dimethylbenzopinacol, 3,3'-dimethylbenzopinacol, 2,2'-dimethylbenzopinacol, 3,4-3',4'-tetramethylbenzopinacol, 4,4'-dimethoxybenzopinacol, 4,4', 4",4"'-tetramethoxybenzopinacol, 4,4'-diphenylbenzopinacol, 4,4'-dichloro-4",4"'-dimethylbenzopinacol, 4,4'-dimethyl-4",4"'-diphenylbenzopinacol, xanthonpinacol, fluorenonepinacol, acetophenonepinacol, 4,4'-dimethylacetophenone-pinacol, 4,4'-dichloroacetophenonepinacol, 1,1,2-triphenyl-propane-1,2-diol, 1,2,3,4-tetraphenylbutane-2,3-diol, 1,2-diphenylcyclobutane-1,2-diol, propiophenone-pinacol, 4,4'-dimethylpropiophenone-pinacol, 2,2'-ethyl-3,3'-dimethoxypropiophenone-pinacol, 1,1,1,4,4,4-hexafluoro-2,3-diphenyl-butane-2,3-diol.

As further compounds according to the present invention, there may be mentioned: benzopinacol-mono methylether, benzopinacol-mono-phenylether, benzopinacol and monoisopropyl ether, benzopinacol monoisobutyl ether, benzopinacol mono (diethoxy methyl) ether and the like.

The pinacol is added to the composition in amounts ranging from 0.01 - 10%, preferably 0.1 - 5%, by weight based on the weight of the acrylate terminated polyene portion of the reactive plasticizer.

The thermal initiators employed for the epoxy resin are thermal initiators selected from dicyandiamide, melamine, guanamine, polycarboxylic acid polyhydrazides, carboxylic acid imides, imidazole derivatives, $BF_3$ adducts and diaryliodonium salts.

The $BF_3$ adducts used herein as thermal initiators include, but are not limited to, $C_6H_5NH_2 \cdot BF_3$, 2,6-$Et_2C_6H_3NH_2 \cdot BF_3$, $EtNH_2 \cdot BF_3$, sec-$Bu_2NH \cdot BF_3$, $Et_2NH \cdot BF_3$, $(C_6H_5)_3P \cdot BF_3$, $C_6H_5NMe_2 \cdot BF_3$, Pyridine $\cdot BF_3$ and $Et_3N \cdot BF_3$, $Et_2O \cdot BF_3$, $(HOCH_2CH_2)_3N \cdot BF_3$ and the like.

The diaryliodonium salts operable herein as thermal initiators those set out in U. S. 4,238,587, and it is understood that so much of the disclosure therein relative to the diaryliodonium salts is incorporated herein by reference. That is, the diaryliodonium salts which can be utilized in the practice of the invention are shown as follows:

$$[(R)_a(R^1)_bI]^+[Y]^-, \qquad (1)$$

where R is a $C_{(6-13)}$ aromatic hydrocarbon radical, $R^1$, is a divalent aromatic organic radical, and Y is an anion, a is equal to 0 or 2, b is equal to 0 or 1 and the sum of a + b is equal to 1 or 2. Preferably, Y is an $MQ_d$ anion where M is a metal or metalloid, Q is a halogen radical and d is an integer equal to 4-6.

Radicals included within R of formula (1) can be the same or different aromatic carbocyclic radicals having from 6 to 20 carbon atoms, which can be substituted with from 1 to 4 monovalent radicals selected from $C_{(1-8)}$alkoxy, $C_{(1-8)}$ alkyl, nitro, chloro, etc. R is more particularly phenyl, chlorophenyl, nitrophenyl, methoxyphenyl, pyridyl, etc. Radicals included by $R^1$ of formula (1) are divalent radicals such as

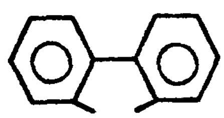 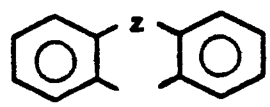.

where Z is selected from -O-, -S-,

$$\overset{O}{\overset{\|}{S}},\ \underset{\underset{O}{\|}}{\overset{O}{\overset{\|}{S}}},\ (CH_2)_n,\ \overset{O}{\overset{\|}{C}},\ -\overset{R^2}{N}-,$$

$R^2$ is $C_{(1-8)}$alkyl or $C_{(6-13)}$aryl, and n is an integer equal to 1-8 inclusive.

Metals or metalloids included by M of formula (1) are transition metals such as Sb, Fe, Sn, Bi, Al, Ga, In, Ti, Zr, Sc, V, Cr, Mn, Cs, rare earth elements such as the lanthanides, for example, Cd, Pr, Nd, etc., actinides, such as Th, Pa, U, Np, etc., and metalloids such as B, P, As, Sb, etc. Complex anions included by $MQ_d$ are, for example, $BF_4^-$, $PF_6^-$, $AsF_6^-$, $SbF_6^-$, $FeCl_4^-$, $SnCl_6^-$, $SbCl_6^-$, $BiCl_5^{--}$, etc.

Some of the diaryliodonium salts which can be used in the practice of the invention are as follows:

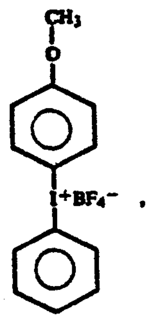
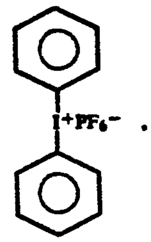

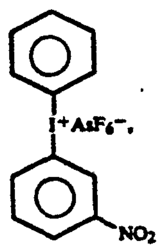
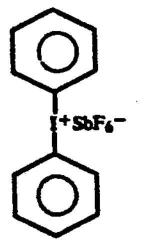

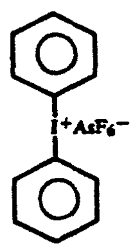
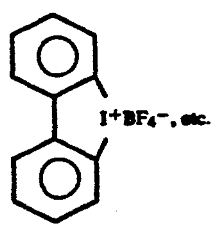

These thermal initiators are added to the system in an amount ranging from 1 to 10% by weight of the epoxy resin.

Accelerators for the epoxy resin thermal initiators such as monuron, chlorotoluron and similar substances are also operable and can be added in amounts ranging from 0.1 to 10 parts by weight of the epoxy resin plasticizer.

In practicing the invention, it is sometimes possible to use a thermal initiator for curing the plasticizer which decomposes at a temperature lower than the fluxing temperature of the plastisol, especially when the composition is quickly heated to the fluxing temperature. This is due to the fact that the fluxing rate is much

faster than the curing rate at the fluxing temperature. Thus, one can heat quickly to the fluxing temperature, flux the plastisol and cool down below the decomposition temperature of the thermal initiator before curing occurs, thereby obtaining a thermoplastic plastisol ready to be cured to a thermoset adhesive on reheating.

The heating step to cure the fluxed solid plastisol is usually carried out for a period of 10 seconds to 30 minutes at a temperature of 50 - 300°C, preferably 80 - 200°C which is sufficient to fully cure the composition to a solid thermoset adhesive, coating or sealant product.

The heating step using a thermal initiator to cure the fluxed plastisol resin composition can be accomplished in several ways. In simple systems, the adhesive composition can be applied by manual means to an adherend, contacted with another adherend and the assembled system heated in a forced air oven until a thermoset bond results.

Additionally and preferably, electromagnetic heating can be utilized as a faster and more efficient means of curing, especially where the substrates to be bonded are plastic materials. In addition to the formation of high strength bonds, electromagnetic bonding techniques aid in (a) fast bond setting times, and (b) automated part handling and assembly.

In practicing the instant invention, electromagnetic heating can be employed with the adhesive composition herein to adhere (1) plastic to plastic, (2) plastic to metal and (3) metal to metal. For example, dielectric heating can be used to bond (1) and (2) supra if the adhesive composition contains sufficient polar groups to heat the composition rapidly and allow it to bond the adherends. Inductive heating can also be used to bond (1), (2) and (3). That is, when at least one of the

adherends is an electrically conductive or ferromagnetic metal, the heat generated therein is conveyed by conductance to the adhesive composition thereby initiating the cure to form a thermoset adhesive. In the instance where both adherends are plastic, it is necessary to add an energy absorbing material, i. e., an electrically conductive or ferromagnetic material, preferably in fiber or particle form (10-400 mesh) to the adhesive composition. The energy absorbing material is usually added in amounts ranging from 0.1 to 2 parts by weight, per 1 part by weight of the adhesive plastisol resin composition prior to fluxing. It is also possible to impregnate the plastic adherend at the bonding joint with particles of the energy absorbing material in order to use inductive heating, but care must be exercised that the plastic is not distorted.

The particulate electromagnetic energy absorbing material used in the adhesive composition when induction heating is employed can be one of the magnetizable metals including iron, cobalt and nickel or magnetizable alloys or oxides of nickel and iron and nickel and chromium and iron oxide. These metals and alloys have high Curie points (730°-2,040°F).

Electrically conductive materials operable herein when inductive heating is employed include, but are not limited to, the noble metals, copper, aluminum, nickel, zinc as well as carbon black, graphite and inorganic oxides.

There are two forms of high frequency heating operable herein, the choice of which is determined by the material to be adhered. The major distinction is whether or not the material is a conductor or non-conductor of electrical current. If the material is a conductor, such as iron or steel, then the inductive method is used. If the material is an insulator, such as wood, paper, textiles, synthetic

resins, rubber, etc., then dielectric heating can also be employed.

Most naturally occurring and synthetic polymers are non-conductors and, therefore, are suitable for dielectric heating. These polymers may contain a variety of dipoles and ions which orient in an electric field and rotate to maintain their alignment with the field when the field oscillates. The polar groups may be incorporated into the polymer backbone or can be pendant side groups, additives, extenders, pigments, etc. For example, as additives, lossy fillers such as carbon black at a one percent level can be used to increase the dielectric response of the plastisol adhesive. When the polarity of the electric field is reversed millions of times per second, the resulting high frequency of the polar units generates heat within the material.

The uniqueness of dielectric heating is in its uniformity, rapidity, specificity and efficiency. Most plastic heating processes such as conductive, convective or infrared heating are surface-heating processes which need to establish a temperature within the plastic by subsequently transfering the heat to the bulk of the plastic by conduction. Hence, heating of plastics by these methods is a relatively slow process with a non-uniform temperature resulting in overheating of the surfaces. By contrast, dielectric heating generates the heat within the material and is therefore uniform and rapid, eliminating the need for conductive heat transfer. In the dielectric heating system herein the electrical frequency of the electromagnetic field is in the range 1-3,000 megahertz, said field being generated from a power source of 0.5-1,000 kilowatts.

Induction heating is similar, but not identical, to dielectric heating. The following differences exist:

(a) magnetic properties are substituted for dielectric properties; (b) a coil is employed to couple the load rather than electrodes or plates; and (c) induction heaters couple maximum current to the load. The generation of heat by induction operates through the rising and falling of a magnetic field around a conductor with each reversal of an alternating current source. The practical deployment of such field is generally accomplished by proper placement of a conductive coil. When another electrically conductive material is exposed to the field, induced current can be created. These induced currents can be in the form of random or "eddy" currents which result in the generation of heat. Materials which are both magnetizable and conductive generate heat more readily than materials which are only conductive. The heat generated as a result of the magnetic component is the result of hysteresis or work done in rotating magnetizable molecules and as a result of eddy current flow. Polyolefins and other plastics are neither magnetic nor conductive in their natural states. Therefore, they do not, in themselves, create heat as a result of induction.

The use of the eletromagnetic induction heating method for adhesive bonding of plastic structures has proved feasible by interposing selected eletromagnetic energy absorbing materials in an independent adhesive composition layer or gasket conforming to the surfaces to be bonded, electromagnetic energy passing through the adjacent plastic structures (free of such energy absorbing materials) is readily concentrated and absorbed in the adhesive composition by such energy absorbing materials thereby rapidly initiating cure of the adhesive plastisol composition to a thermoset adhesive.

Electromagnetic energy absorbing materials of various types have been used in the electromagnetic induction heating technique for some time. For instance, inorganic oxides and powdered metals have been incorporated in bond layers and subjected to electromagnetic radiation. In each instance, the type of energy source influences the selection of energy absorbing material. Where the energy absorbing material is comprised of finely divided particles having ferromagnetic properties and such particles are effectively insulated from each other by particle containing nonconducting matrix material, the heating effect is substantially confined to that resulting from the effects of hysteresis. Consequently, heating is limited to the "Curie" temperature of the ferromagnetic material or the temperature at which the magnetic properties of such material cease to exist.

The electromagnetic adhesive composition of this invention may take the form of an extruded ribbon or tape, a molded gasket or cast sheet. In liquid form it may be applied by brush to surfaces to be bonded or may be sprayed on or used as a dip coating for such surfaces.

The foregoing adhesive plastisol composition, when properly utilized as described hereinafter, results in a one component, solvent free bonding system which permits the joining of metal or plastic items without costly surface pretreatment. The electromagnetically induced bonding reaction occurs rapidly and is adaptable to automated fabrication techniques and equipment.

To accomplish the establishment of a concentrated and specifically located heat zone by induction heating for bonding in accordance with the invention, it has been found that the electromagnetic adhesive plastisol compositions described above can be activated and a bond created by an induction heating system operating with an

electrical frequency of the electromagnetic field of from about 5 to about 30 megacycles and preferably from about 15 to 30 megacycles, said field being generated from a power source of from about 1 to about 30 kilowatts, and preferably from about 2 to about 5 kilowatts. The electromagnetic field is applied to the articles to be bonded for a period of time of less than about 2 minutes.

As heretofore mentioned, the electromagnetic induction bonding system and improved electromagnetic adhesive compositions of the present invention are applicable to the bonding of metals, thermoplastic and thermoset material, including fiber reinforced thermoset material.

The following examples will help to explain, but expressly not limit, the instant invention. Unless otherwise noted, all parts and percentages are by weight.

The lap shear strengths of the adhesives were measured on an Instron Tensile Tester using the method set out in ASTM D-1002.

## Examples 1 and 2

## Preparation of Isocyanate Terminated Reactive Plasticizers

To separate samples of toluene diisocyanate (TDI) is added dropwise a stoichiometric amount of a diol or triol over a time period of 4 hours at room temperature in nitrogen atmosphere with stirring. After standing overnight, the isocyanate-terminated plasticizers were ready for plastisol preparation. TABLE I shows the summarization of plasticizer structures:

TABLE I

| Example | TDI | PCP-200 | PCP-300 |
|---|---|---|---|
| 1 | X | X | - |
| 2 | X | - | X |

PCP-200: polycaprolactonediol (MW = 530 g/mole)

PCP-300: polycaprolactonetriol (MW = 540 g/mole)

Example 3

30 g of a polyvinyl alcohol powder was dispersed in 70 g of each of the isocyanate terminated plasticizers obtained from Example 1 and Example 2. Each plastisol fluxed into a clear solid material upon heating at 150°C for 5 minutes. After exposing to the air overnight, both materials increased in rigidity through the reaction of moisture with isocyanate residue.

Example 4

30 g of polyvinyl formal (Formvar 15/95 E from Monsanto) was dispersed in 70 g of the isocyanate terminated plasticizer from Example 1. The plastisol was stable at least a month upon standing at room temperature. The plastisol was a clear flexible solid material after fluxing at 150°C for 5 minutes. This solid material increased its stiffness by reacting its isocyanate residue with moisture in air.

Example 5

To show the use of these plastisols as one-package urethane adhesives, various plastisols were applied between two pieces of fiber reinforced crosslinked polyester (FRP) having 1 $in^2$ of overlap. The properties of the plastisols after fluxing and curing are summarized

in TABLE II:

TABLE II

| Polymers (30%) | Poly(vinyl alcohol) | | Polyvinyl formal) |
|---|---|---|---|
| Plasticizer (70%) | Example 1 | Example 2 | Example 1 |
| Fluxing Temp., °C | 125 | 120 | 130 |
| Lap Shear Strength* (psi); FRP | Substrate Failure | Substrate Failure | Substrate Failure |
| Impact Resistance* (in-lbs); FRP | Substrate | 23 Failure | Substrate Failure |

*Adhesives were cured at 150°C for 10 minutes.

The following examples in TABLE III show the use of the isocyanate-terminated plasticizer from Example 1 in combination with an acrylate-terminated material as an adhesive for sheet molding compounds (SMC). The polyvinyl formal resin was admixed with the plasticizer and applied to sheet molding compound adherends in a one inch overlap. The overlapped adherends were placed in an oven at 150°C for 10 minutes to cure the adhesive. The lap shear and impact resistance before and after aging are shown in TABLE III:

TABLE III

Reactive Plastisols Based on Polyvinyl Formal (20%) an
their Application as SMC Adhesives

| Example # | 6 | 7 | 8 | 9 |
|---|---|---|---|---|
| Plasticizer | | | | |
| TDI-PCP200-TDI | | | | |
| from Example 1 | 80% | 70% | 60% | 50% |
| Acrylate[a] | - | 10% | 20% | 30% |
| Curing | | | | |
| T;°C | | 150 | 150 | 150 |
| 150 | | | | |
| t;min. | 10 | 10 | 10 | 10 |
| Lap Shear (psi) | | | | |
| Before Aging[b] | Sub.Fail. | Sub.Fail. | Sub.Fail. | 508(2S[c],2A[d]) |
| 495(2S,2A) After Aging | | 520 | 606(3S,1A) | 610(3S,1A) |
| Sub.Fail. | | | | |
| Impact Resistance (in-lb) | | | | |
| Before Aging | Sub.Fail. | Sub.Fail. | Sub.Fail. | Sub.Fail. |
| After Aging | 34(2S,1A) | Sub.Fail. | Sub.Fail. | Sub.Fail. |

(a) 50% of Epocryl-12 (bisphenol-A epoxy methacrylate - Shell C + 50% of TEGDMA (tetraethylene glycol dimethacrylate)

(b) Aging Condition - 400°F for 45 minutes

(c) S = Substrate Failure

(d) A = Adhesion Failure

The following examples in TABLE IV show the use of a plastisol composition wherein the plasticizer is a combination of the isocyanate terminated material from Example 1 and an epoxide resin. The procedure followed was the same as for the examples set out in TABLE III. The results are shown in TABLE IV:

## TABLE IV

**Reactive Plastisols Based on Polyvinyl Formal (20%) and their Application as SMC Adhesives**

| Example # | 11 | 12 | 13 | 14 | 15 |
|---|---|---|---|---|---|
| Plasticizer | | | | | |
| TDI-PCP-200-TDI from Example 1 | 80% | 70% | 60% | 50% | 40% |
| Epon-828[b] | - | 10% | 20% | 30% | 40% |
| Curing | | | | | |
| T;°C | 150 | 150 | 150 | 150 | 150 |
| t;min. | 10 | 10 | 10 | 10 | 10 |
| Lap Shear (psi) | | | | | |
| Before Aging[a] | Sub.Fail. | 450 | 410 | 410 | 350 |
| After Aging | 520 | Sub.Fail. | Sub.Fail. | 630(3S[c],1A[d] | 700(2S,2A) |
| Impact Resistance | | | | | |
| Before Aging | Sub.Fail. | 22 | 29 | 21 | 21 |
| After Aging | 34(2S,1A) | Sub.Fail. | Sub.Fail. | Sub.Fail. | Sub.Fail. |

(a) Aging Condition - 400°F for 45 minutes

(b) Epoxy resin having an epoxide equivalent of 185-192 from Shell Chemical Co. - 6 phr of dicyandiamide based on 100 phr of Epon-828 was added to cure epoxy resin

(c) S = Substrate failure

(d) A = Adhesion Failure

I CLAIM:

1. A one component thermosettable reactive plastisol composition comprising

(1) at least one thermoplast in powder form containing at least two active hydrogen groups;

(2) a liquid plasticizer having isocyanate or blocked isocyanate terminal groups, either per se or in combination with a plasticizer group member selected from the group consisting of

(a) an acrylate terminated monomer, oligomer or prepolymer,

(b) an epoxide resin containing more than one epoxide group per molecule, and

(c) a mixture of (a) and (b).

2. The composition according to Claim 1 containing in addition a thermal initiator for the acrylate terminated monomer, oligomer or prepolymer selected from the group consisting of substituted or unsubstituted pinacols, azo compounds, thiurams, organic peroxides and mixtures thereof.

3. The composition according to Claim 1 containing in addition a thermal initiator for the epoxide resin selected from the group consisting of dicyandiamide, melamine, guanamine, polycarboxylic acid, polyhydrazides, carboxylic acid imides, imidazole derivatives, $BF_3$ adducts and diaryliodonium salts.

4. The composition according to Claim 1 wherein the thermoplast is polyvinyl acetal.

5. The composition according to Claim 1 wherein the thermoplast is polyvinyl alcohol.

6. The process of coating a substrate which comprises applying thereto a composition comprising

(1) at least one thermoplast in powder form containing at least two active hydrogen groups;

(2) a liquid plasticizer having isocyanate or blocked isocyanate terminal groups, either per se or in combination with a plasticizer group member selected from the group consisting of

(a) an acrylate terminated monomer, oligomer or prepolymer,

(b) an epoxide resin containing more than one epoxide group per molecule, and

(c) a mixture of (a) and (b),

and, thereafter, heating said composition at or above its fluxing temperature for a time sufficient to obtain a thermoset coating.

7. The process according to Claim 6 wherein the heating step is carried out by electromagnetic heating.

8. The process according to Claim 7 wherein the electromagnetic heating is by induction heating and 0.1 to 2 parts by weight per part of the composition of an electrically conductive or photomagnetic material is added to the composition.

9. The process according to Claim 7 wherein the electromagnetic heating is by dielectric heating.

10. The process of adhering two substrates which comprises applying to at least one of said substrates a composition comprising

(1) at least one thermoplast in powder form containing at least two active hydrogen groups;

(2) a liquid plasticizer having isocyanate or blocked isocyanate terminal groups, either per se or in combination with a plasticizer group member selected from the group consisting of

(a) an acrylate terminated monomer, oligomer or prepolymer,

(b) an epoxide resin containing more than one epoxide group per molecule, and

(c) a mixture of (a) and (b),

contacting said substrates with the composition therebetween and heating said contacted substrates at a temperature at or above the fluxing temperature of said composition for a time sufficient to obtain a thermoset adhesive.

11. The process according to Claim 10 wherein the heating step is carried out by electromagnetic heating.

12. The process according to Claim 11 wherein the electromagnetic heating is by induction heating and 0.1 to 2 parts by weight per part of the composition of an electrically conductive or photomagnetic material is added to the composition.

13. The process according to Claim 11 wherein the electromagnetic heating is by dielectric heating.